# EUROPEAN PATENT APPLICATION

(11) **EP 3 495 291 A1**
(43) Date of publication of application: **12.06.2019**
(21) Application number: 17206205.1
(22) Date of filing: 08.12.2017
(51) Int. Cl.: B65G 47/51, B67C 7/00

(54) **AN ACCUMULATION TABLE AND A METHOD FOR OPERATING AN ACCUMULATION TABLE**

(71) Applicant: Gebo Packaging Solutions Italy SRL, 43126 Parma (IT)
(72) Inventor: SOLFA, Andrea, 37139 VERONA (IT)
(74) Representative: Sidel Group

(57) **Abstract**

An accumulation device (1) for accumulating a plurality of articles (2), comprising: an inlet conveyor (10), which is adapted to receive articles (2) at an inlet station (I) and can be operated at a first speed; an outlet conveyor (11), which is adapted to output articles (2) at an outlet station (O) and can be operated at a second speed; deflecting means (12) interacting with articles (2) to deflect them towards outlet conveyor (11), so as to define an accumulation area (AO) available for a buffer (3) of articles (2) along a transfer path (T); and a thermal treatment device (20), which interacts, in use, with articles (2) along transfer path (T) and is configured to adjust the temperature of articles (2) upstream of outlet section (O), with reference to the advancing direction of articles (2) along transfer path (T).

## Description

The present invention relates to an accumulating table and to a method for operating an accumulation table.

As is known, many pourable food product comprising not only food product like milk, fruit juice or beverages in general, but also detergents are sold in articles having different shape and dimension.

These containers are typically made within bottling lines, which comprise a plurality of units for carrying out respective operations on the articles.

Very briefly, the bottling line comprises, a filling unit for filling containers with a pourable food product, a capping/sealing unit for capping/sealing the containers and an end of line unit including at least a packing station and a palletization station.

In some embodiments, the bottling line can comprises a labelling unit for applying a plurality of labels on respective articles.

The bottling line further comprises a plurality of transfer elements, which are interposed between two consecutive units.

Even though the bottling line is operated at a substantially constant rate, some units, e.g. the labelling unit, can be operated with an over-speed, i.e. with a rate greater than the rate of the bottling line.

In order to cope with this difference in the rates, the bottling unit comprises a plurality of accumulation tables interposed each between two consecutive units and adapted to form relative buffers of articles interposed between two consecutive units.

In greater detail, each accumulation table comprises:
- an inlet conveying line, which conveys the articles a first rate;
- an outlet conveying line, which conveys the article a second rate; and
- a diverting wall, which extends through the inlet and outlet conveying lines, interferes with the articles travelling onto the inlet conveyor and displace them on the outlet conveyor.

In this way, a buffer of article is formed on the accumulation table.

The diverting wall is, in some embodiments, movable, in order to adjust the number of articles forming each buffer.

The operation of the labelling unit and/or packing unit can be rendered problematic by the formation of the dew on the outer walls of the articles. The dew point depends on the temperature of the pourable product to be filled, and on the temperature and the humidity in the environment surrounding the bottling line.

The dew is likely to form, when the temperature of the pourable product is particularly low, e.g. 4°C, and the temperature inside the bottling plant is particularly high due to the season of the year, e.g. 28°C.

In order to reduce the formation of the dew, it is known in the art to provide the bottling line with a warmer, which is arranged downstream of the capping unit and upstream of the labelling unit.

Warmer sprays hot water, e.g. at 47°C, on the filled articles, in order to increase the temperature of the walls of the articles and to reduce the risk of formation of the dew.

The warmer is controlled to remain switched off, completely switched on or partially switched on, on the basis of the actual dew point and, therefore, on the basis also of the temperature inside the bottling line.

Thus, in the areas and during the period of the year when the temperature is particularly low, the warmer can remain switched off for a long period.

In this condition, the warmer increases the size of the bottling line without carrying out any substantial operation on the articles.

A need is felt to optimize the utilization of the room available for the bottling line, without impairing the possibility of preventing the formation of the dew the walls of the articles and potentially increasing the size of the buffer of the accumulation table at least in some operative conditions.

It is an object of the present invention to provide an accumulation table, which meets the above requirements.

The aforementioned object is achieved by the present invention as it relates to an accumulation table, as claimed in claim 1.

The invention also relates to a method of operating an accumulation table, as claimed in claim 11.

One preferred embodiment is hereinafter disclosed for a better understanding of the present invention, by way of non-limitative example and with reference to the accompanying drawings, in which:
- Figure 1 is a perspective view of an accumulation table for accumulating articles, in accordance with the invention, with parts removed for clarity;
- Figures 2 and 3 are top views of the accumulation table of Figure 1 in a first and in a second operative conditions respectively without the articles to be accumulated, with parts removed for clarity;
- Figures 4 and 5 are top views of the accumulation table of Figures 1 to 3 respectively in the first and the second operative condition with the articles to be accumulated and with parts removed for clarity;
- Figure 6 is a top view of the accumulation table of Figures 1 to 5 in a further operative configuration, with parts removed for clarity;
- Figure 7 is a schematic representation of a bottling unit, which comprises the accumulation table of Figures 6 to 6; and
- Figure 8 is a schematic representation of a thermal treatment area, a theoretically available accumulation area and an actually available accumulation area.

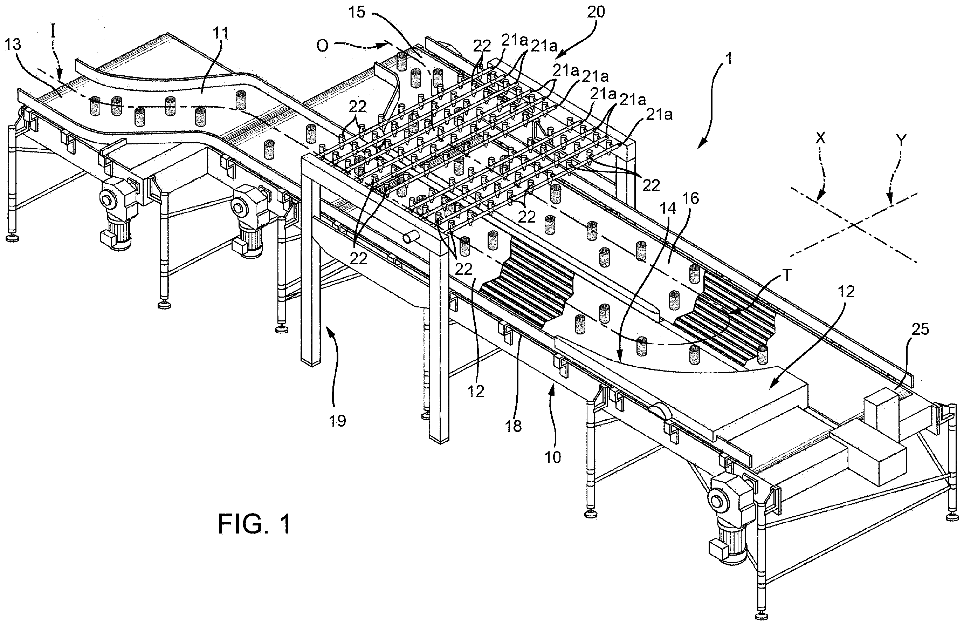

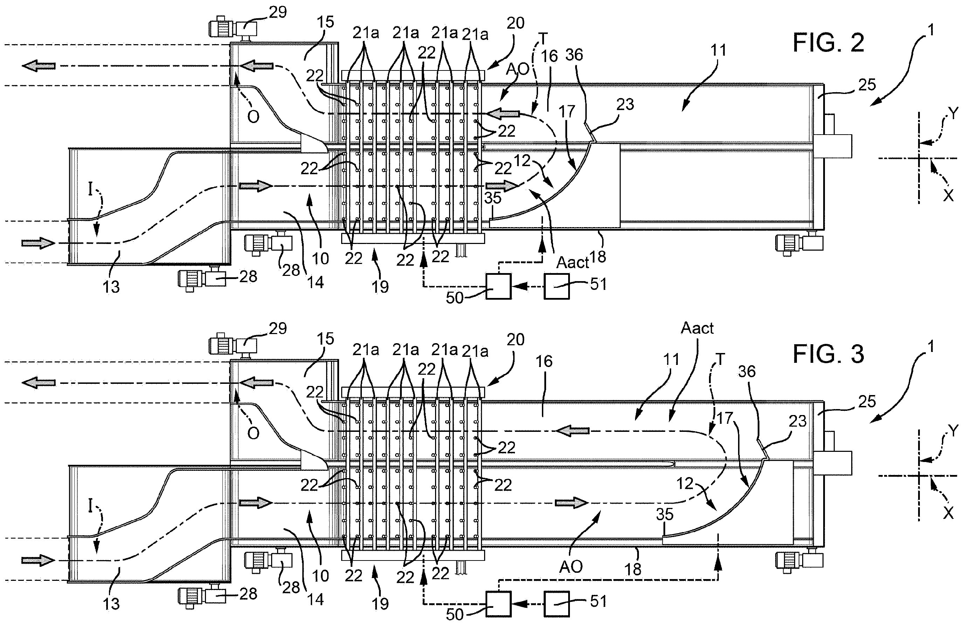

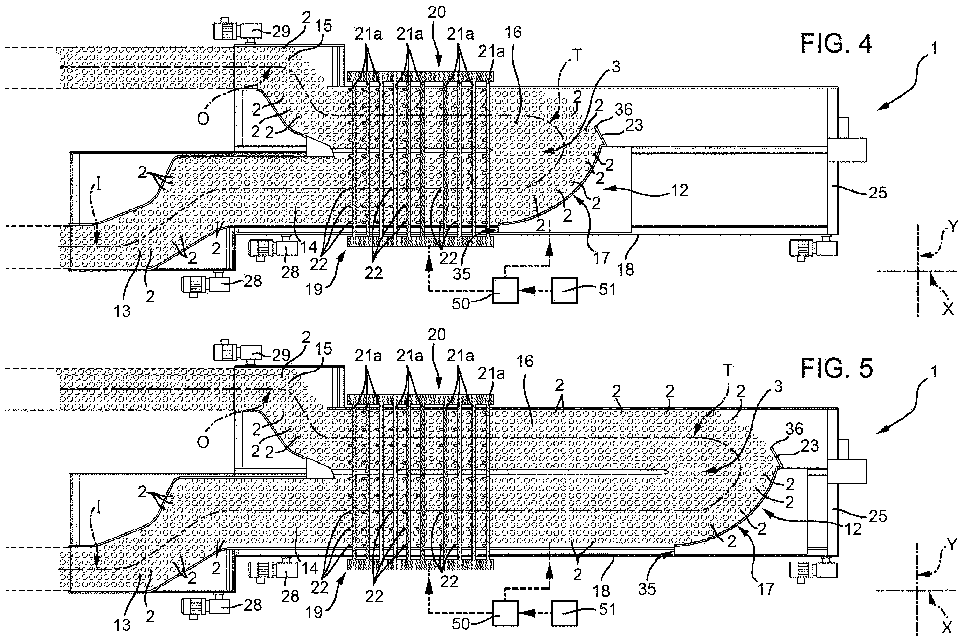

With reference to Figures 1 to 6, numeral 1 indicates an accumulation table for accumulating a plurality of articles 2.

Articles 2 are, in particular, containers filled with a pourable product and capped.

Articles 2 may be jars, bottles, cans, tins, pouches, etc..

Still more in particular, articles 2 are filled with a food pourable product.

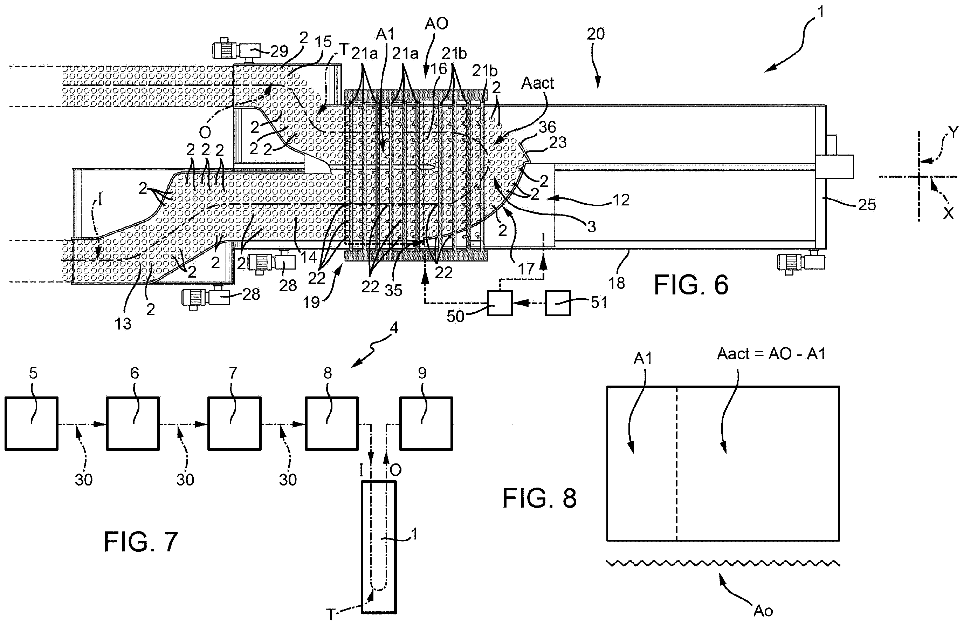

Accumulation table 1 is adapted to be incorporated in a bottling line 4 (shown only schematically in Figure 7) for producing a plurality of filled, capped/sealed, labelled if necessary, and articles 2.

In greater detail, bottling line 4 substantially comprises:
- a blowing unit 5 for blowing articles 2, starting from respective pre-forms;
- a rinsing unit 6 for rising the articles 2;
- a filling unit 7 for filling the articles 2 with the pourable food product;
- a capping/sealing unit 8 for applying a plurality of caps onto respective article 2;
- a labelling unit 9 for labelling the articles 2 with respective labels; and
- an end of line unit (not shown), which comprise a packing unit.

Blowing unit 5 and labelling unit 9 can be not present in some embodiments of bottling line 4.

Bottling line 4 also comprises a plurality of transfer elements 30 interposed between two consecutive units.

Bottling line 4 is normally operated at a substantially constant rate. However, some units, preferably labelling unit 9, can process articles 2 with an over-speed.

In order to meet the different rates of two consecutive units, bottling line 4 comprises a plurality of accumulation tables 1 which are aimed to create a buffer 3 of articles 2 between the two consecutive units.

In the following of the present description, only one accumulation table 1 will be described.

In the embodiment shown, accumulation table 1 is interposed between capping unit 8 and labelling unit 9.

Furthermore, accumulation table 1 is adapted to convey articles 2 along a transfer path T and to form buffer 3 during the transfer on path T.

Transfer path T extends from an inlet station I to an outlet station O.

In the embodiment shown, inlet station I is arranged downstream of capping unit 8 and outlet station O is arranged upstream of labelling unit 9.

In the embodiment shown, path T is partly U-shaped.

Preferably, accumulation table 1 substantially comprises:
- a conveyor 10, which receives articles 2 at inlet station I and is operated at a first speed;
- a conveyor 11, which outputs articles 2 at outlet station O and is operated at a second speed; and
- a deflector 12, which is arranged along transfer path T between inlet station I and outlet station O and interacts with articles travelling on conveyor 10 to deflect them towards conveyor 11.

In this way, deflector 12 creates on accumulation table 1 a theoretically available accumulation area A0 for buffer 3.

The second speed of conveyor 11 can be lower, higher or equal to the first speed of conveyor 10.

As it will be evident from the foregoing of the present description, theoretically available accumulation area A0 defines a maximum value for actually available accumulation area Aact for buffer 3.

In the embodiment shown, conveyor 10 comprises an inlet portion 13 defining station I and a main portion 14 parallel to a direction X.

Conveyor 11 comprises an outlet portion 15 defining station O and a main portion 16 parallel to direction X and to main portion 14 of conveyor 10.

It is also possible to define a direction Y, which lies on the plane defined by accumulation table 1 and is orthogonal to direction X.

Conveyors 10, 11 move in opposite direction with respect to one another.

Main portions 14, 16 are adjacent to one another.

Accumulation table 1 comprises a first and a second motor 28, 29 independent from one another and independently driving conveyor 10, 12 respectively.

Deflector 12 comprises, in the embodiment show:
- a curved wall 17 interacting with articles 2 travelling onto main portions 14 of conveyor 10; and
- a fin 23 which protrudes from wall 17 and is arranged on main portion 16 of conveyor 11.

Wall 17 extends as of a side 18 of conveyor 10 towards conveyor 11. Side 18 bounds conveyor 10 on the opposite side of conveyor 11.

In particular, wall 17 extends at increasingly greater distances from side 18, proceeding along direction X parallel to the advancing direction of article 2.

In this way, wall 17 deviates article 2 travelling on main portion 14 of conveyor 10 towards main portion 16 of conveyor 11 transversally to direction X.

The U-shaped portion of transfer path T is formed by main portion 14 of conveyor 10 upstream to wall 17, wall 17 and main portion 16 of conveyor 11 downstream of wall 17.

In the embodiment shown, wall 17 comprises a pair of opposite ends 35, 36 arranged respectively on the side of inlet/outlet I, O and on the opposite side thereof. Fin 23 protrudes from end 36 on the opposite side of end 35.

Advantageously, accumulation table 1 comprises a thermal treatment device 20 which interacts with articles 2 travelling along transfer path T and is configured to adjust the temperature of articles 2 upstream of outlet station O, with reference to the advancing direction of articles 2 along transfer path T; treatment device 20 interacts with articles 2 along a thermal treatment area A1 which is contained within theoretically available accumulation area A0.

In greater detail, the size of thermal treatment area A1 can be selectively adjusted from a minimum value to a maximum value, which is lower than or equal to theoretically available accumulation area A0.

For example, when the size of thermal treatment area is null, all the accumulation area A0 remains actually available for buffer 3. In other words, A0=Aact.

In the other conditions, Aact=A0-A1, as shown in Figure 8.

In the embodiment shown, thermal treatment device 20 is a warmer, which is adapted to increase the temperature of outer walls of article 2, so as to prevent the formation of the dew on those outer walls.

The size of thermal treatment area A1 depends on the dew point in the environment surrounding accumulation table 1.

The dew point, in turn, depends on the temperature of the pourable product inside article 2, and on the temperature and the humidity of the environment surrounding accumulation table 1.

In the following, a non limitative example of the operation of thermal treatment device 20 is described, with reference to three different situations in which:
- no heating of outer walls of article 2 is needed if the dew point is lower than 20°C;
- a first lower value of area A1 is needed to provide a first lower amount of heat to outer walls of article 2, if the dew point is between 20 and 23°C; and
- a second higher value of area A1 is needed to provide a second higher amount of heat to outer walls of article 2, if the dew point is between 23°C and 26°C, being 26°C the maximum dew point in the bottling unit.

Accordingly, A0=Act, if dew point is lower than 20°C.

If dew point is between 20°C and 23°C, actually available area Aact for buffer 3 equals the difference between the theoretically available area A0 and the first lower value of area A1.

If dew point is between 23°C and 26°C, actually available area Aact for buffer 3 equals the difference between theoretically available area A0 and the second higher value of area A1.

In the embodiment shown, thermal treatment device 20 and, therefore, thermal treatment area A1 extends:
- in part between inlet station I and deflector 12 on main portion 14 of conveyor 10; and
- in part between deflector 12 and outlet station O on main portion 16 of conveyor 11.

Furthermore, thermal treatment device 20 comprises:
- a frame 19; and
- a plurality of bars 21a, 21b extending along direction Y and provided, each, with a plurality of sprayers 22 adapted to spray a heat transfer medium, water at 43 °C in the embodiment shown, on articles 2 travelling on transfer path T.

Bars 21a, 21b are fitted to frame 19.

Bars 21a, 21b are aligned parallel to direction X, in the embodiment shown.

Bars 21a, 21b are arranged at main portions 14, 16 of conveyor 10 respectively upstream and downstream of wall 17, in the embodiment shown.

Thermal treatment device 20 can be controlled in such a way that only sprayers 22 of one or more active bars 21a spray the heat transfer medium on articles 2, on the basis of dew point in the environment surrounding accumulation table 1.

The sprayers 22 of bars 21b remain idle.

In this way, thermal treatment area A1 corresponds to the area bound by the projections of active bars 21a, 21b on transfer path T.

In this way, the more is the number of active bars 21a, 21b the more is thermal treatment area A1.

Deflector 12 is movable parallel to direction X, so as to adjust the size of accumulation area A0.

In greater detail, deflector 12 is continuously movable between:
- a first end position, in which deflector 12 is adjacent to thermal treatment area A1 and, therefore, the size of accumulation area A0, Aact theoretically and actually available for buffer 3 assumes the lowest value, for a given size of thermal treatment area A1; and
- a second end position, in which deflector 12 is on at the farther distance from thermal treatment area A1 and, therefore, the size of theoretically and actually available accumulation area A0, Aact assumes the highest value, for a given size of thermal treatment area A1.

In the embodiment shown, when deflector 12 is in the first end position, it is adjacent to the active bar 21b, which is arranged on conveyor 10 most downstream with reference to the advancing direction of articles 2 on it and which is arranged on conveyor 12 most upstream with reference to the advancing direction of articles 2 on it.

When deflector 12 is in the second end position, it is adjacent to the a side 25 of accumulation table 1 extending along direction Y and opposite to inlet and outlet station I, O along direction X.

In the embodiment shown, when deflector 12 in the first end position, end 35 is arranged as close as possible to most downstream active bar 21a, with reference to advancing direction of conveyor 10. When deflector 12 is in the second end position, end 35 is arranged farther from most downstream active bar 21a than when deflector 12 in the second end position.

Finally, accumulation table 1 comprises:
- a control unit 50 (only schematically shown); and
- a psychrometer 51, which is configured to generate a signal associated to the dew point in the environment surrounding accumulation table 1.

In detail, control unit 50 is programmed, on the basis of the signal generated by psychrometer 51, to adjust thermal treatment area A1 between the minimum value and the maximum value.

In the embodiment shown, control unit 50 is programmed to adjust thermal treatment area A1 by adjusting the number of bars 21a which are active.

Control unit 50 is also programmed, on the basis of operative conditions of bottling unit 4, to adjust the value of theoretically available accumulation area A0 for a given value of thermal treatment area A1.

In the embodiment shown, control unit 50 is programmed to adjust the value of theoretically available accumulation area A0 for a given value of thermal treatment area A1 by moving deflector 12 between the first end position and the second end position.

In use, control unit 50 sets, on the basis of the operative conditions of bottling unit 4, deflector 12 in a given position.

In this way, control unit 50 adjusts the value of theoretically available accumulation area A0 for buffer 3 of articles 2.

Furthermore, psychrometer 51 generates a signal associated to the dew point in the environment surrounding accumulation table 1.

Control unit 50 adjusts thermal treatment area A0, on the basis of the signal generated by psychrometer 51.

Accordingly, actually available accumulation area Aact for buffer 3 equals the difference between theoretically available area A0 and thermal treatment area A1.

For example, in case the dew point is lower than 20°C, no heating of outer walls of articles is needed.

In this condition, control unit 50 is programmed to render null thermal treatment area A1, so that whole accumulation area A0 actually remains available for buffer 3. In other words, A0=Act.

In case the dew point is between 20°C and 23°C, control unit 50 is programmed to set thermal treatment area A1 equal to the first lower value. In this way, the first lower amount of heat is transferred to outer walls of articles 2 and accumulation area actually available Aact for buffer 3 equals the difference between A0 and the first lower value of thermal treatment area A1.

In case the dew point is between 23°C and 26°C, being 26°C the maximum dew point in the environment surrounding accumulation table 1, control unit 50 is programmed to set thermal treatment area A1 equals to the second higher value of thermal treatment area A1.

In this way, the second higher amount of heat is transferred to outer walls of articles 2 and accumulation area actually available Aact for buffer 3 equals the difference between theoretically available accumulation area A0 and the second higher value of thermal treatment area A1.

In other words, the higher is the dew point, the larger is thermal treatment area A1, the smaller is actually available accumulation area Aact for buffer 3, for a given value of thermal treatment area A1.

In the embodiment shown, control unit 50 adjusts thermal treatment area A1 by activating a corresponding number of bars 21a and leaving idle the remaining bars 21b.

For each value of thermal treatment area A1, control unit 50 can set diverter 12 in a corresponding first end position at which a relative minimum value of actually available accumulation area Aact for buffer 3.

In the embodiment shown, in the corresponding first end position, diverter 12 is arranged as close as possible to most downstream active bar 21b, with reference to the advancing direction of conveyor 10.

Accumulation table 1 is fed with articles 2 at inlet station I and outputs articles 2 at outlet station O.

As they are arranged on accumulation table 1, articles 2 move along a transfer path T from inlet station I to outlet station O.

In the embodiment shown, transfer path T is U-shaped.

In greater detail, articles 2 move along inlet portion 13 and main portion 14 of conveyor 10.

As they abut against deflector 12, articles 2 are displaced on main portion 16 of conveyor 11.

Being the speed of conveyor 12 lower than the speed of conveyor 10, articles 2 form buffer 3.

As they travel along main portion 14, 16 of respective conveyors 10, 11, articles 2 pass below bars 21a, 21b.

Sprayers 22 of active bars 21a spray the heat transfer medium on articles 2.

In the embodiment shown, thermal treatment device 20 is a warmer and sprayers 22 warm the outer walls of articles 2.

From an analysis of the features of accumulation table 1 and of method according to the present invention, the advantages it allows to obtain are apparent.

In particular, accumulation table 1 comprises thermal treatment device 20, which adjusts the temperature of articles 2 travelling along transfer path T inside thermal treatment area A1 contained inside theoretically available accumulation area A0.

In this way, depending on the environmental conditions, accumulation table 1 can be used:
- only for accumulating articles 2 on whole theoretically available accumulation area A0, by leaving idle thermal treatment device 20; or
- for both carrying out thermal treatment on articles 2 inside area A1 and accumulating buffer 3 on the actually available accumulation area Aact by activating only a portion of or whole thermal treatment device 20.

Furthermore, actual accumulation area Aact for buffer 3 can be minimized by activating the whole thermal treatment device 20 and by arranging deflector 12 in the first end position. In this way, accumulation table 1 operates substantially as a thermal treatment device.

Accordingly, it is possible to reduce the costs, the size and the required managing operations of the resulting bottling line 3, in comparison with the known solution described in the introductory part of the present description in which thermal treatment device 20 and accumulation table 1 are separate and distinct.

Furthermore, in case thermal treatment device 20 remains partially or completely idle, it is possible to increase the potential maximum size of actual accumulation area Aact in comparison with, by simply using the area below idle thermal treatment device 20 for accumulating buffer 3.

Finally, the position of deflector 12 can be selectively adjusted, so as to adjust the size of available accumulation area A0 for a given value of thermal treatment area A1.

Clearly, changes may be made to accumulation table 1 and method as described and illustrated herein without, however, departing from the scope of protection as defined in the accompanying claims.

In particular, transfer path T could be shaped in a different way, e.g. I-shaped or C-shaped.

Furthermore, accumulation table 1 could comprise a spray pan instead of bars 21a, 21b.

Furthermore, conveyors 10, 11 could move at variable speed so as to adjust the time interval during which articles 2 undergo the thermal treatment.

Finally, thermal treatment device 20 could be a cooler instead of a warmer.

## Claims

1. An accumulation device (1) for accumulating a plurality of articles (2) along a transfer path (T), comprising:
- an inlet conveying line (10), which is adapted to receive said articles (2) at an inlet station (I) of said transfer path (T) and can be operated at a first speed;
- an outlet conveying line (11), which is adapted to output said articles (2) at an outlet station (O) of said transfer path (T) and can be operated at a second speed; and
- deflecting means (12) arranged along said transfer (T) path and interacting, in use, between said inlet and said outlet sections (I, O) with said articles (2) to deflect them towards said outlet conveyor (11), so as to define a theoretically available accumulation area (A0) for a buffer (3) of said articles (2) along said transfer path (T) ;
**characterized by** comprising a thermal treatment device (20), which interacts, in use, with said articles (2) along said transfer path (T) and is configured to adjust the temperature of said articles (2) upstream of said outlet section (O), with reference to the advancing direction of said articles (2) along said transfer path (T);
said thermal treatment device (20) interacting, in use, with said articles (2) along a thermal treatment area (A1) contained within said theoretically available accumulation area (A0).

2. The accumulation device of claim 1, **characterized in that** the value of said thermal treatment area (A1) can be selectively adjusted from a minimum value to a maximum value;
said maximum value being lower than or equal to said theoretically available accumulation area (A0).

3. The accumulation device of claim 1 or 2, **characterized in that** said theoretically available accumulation area (A0) can be selectively adjusted for a given value of said thermal treatment area (A1).

4. The accumulation device of any one of the foregoing claims, **characterized in that** said deflecting means (12) are selectively movable with respect to said inlet and/or outlet station (I, O), so as to adjust the length of said transfer path (T) and the size of said theoretically available accumulation area (A0), for a given value of said thermal treatment area (A1).

5. The accumulation device of claim 4, **characterized in that** said deflecting means (12) are continuosuly movable between:
- a first position, in which they are arranged at an end of said thermal treatment area (A1) and in which said theoretically available accumulation area (A0) is minimized; and
- a second position, in which they are farther from said thermal treatment device (20) than in said first position and in which said theoretically available accumulation area (A0) is greater than in said first position.

6. The accumulation device of any one of claims 2 to 5, **characterized in that** the value of said thermal treatment area (A1) is selectively adjustable on the basis of at least one parameter associated to a dew point in the environment of said accumulation device.

7. The accumulation device of any one of the foregoing claims, **characterized in that** said thermal treatment device (20) comprises a plurality of bars (21a, 21b) provided each with a plurality of sprayers (22) configured to selectively spray a heat transfer fluid on said articles (2);
said bars (21a, 21b) extending each along a first direction (Y) and being aligned along a second direction (X) transversal to said first direction (Y);
said transfer path (T) extending parallel to said second direction (X) in correspondence of said thermal treatment device (20).

8. The accumulation device of any one of the foregoing claims, **characterized in that** said thermic treatment device (20) is a warmer.

9. The accumulation device of any one of the foregoing claims, **characterized in that** said transfer path (T) is U-shaped, C-shaped or I-shaped.

10. The accumulation device of any one of the foregoing claims, **characterized in that** said thermal treatment device (20) extends in part between said inlet station (I) and said deflecting means (12) along said transfer path (T) and in part between said deflecting means (12) and said outlet station (O) along said transfer path (T) .

11. A method of accumulating a plurality of articles (2), comprising the steps of:
i) conveying said articles (2) at a first speed at an inlet station (I) of a transfer path (T);
ii) conveying said articles (2) at a second speed at an outlet station (O) of said transfer path (T);
iii) deflecting said articles (2) along said transfer path (T) and towards said outlet conveyor (11), so as to define a theoretically available accumulation area (A0) for a buffer (3) of said articles (2) along said transfer path (T) ;
**characterized by** comprising the steps of:
iv) carrying out a thermal treatment on said articles (2) travelling along said transfer path (T) in order to adjust the temperature of said articles (2) upstream of said outlet section (O), with reference to the advancing direction of said articles (2) along said transfer path (T) .

12. The method of claim 11, **characterized by** comprising the step v) of adjusting the size of said thermal treatment area (A1) between a minimum value and a maximum value, which is lower than or equal to said theoretically available accumulation area (A0).

13. The method of claim 11 or 12, **characterized by** comprising the step vi) of selectively adjusting the size of said theoretically available accumulation area (A0), for a given value of said thermal treatment area (A1).

14. The method of claim 13, **characterized by** comprising the step vii) of moving said deflecting means (12) between at least:
- one first position, in which it is arranged at an end of said thermal treatment area (A1) and in which said theoretically available accumulation area (A0) is minimized; and
- one second position, in which it is farther from said thermal treatment device (20) than in said first position and in which said accumulation area (A0) is greater than in said first position.

15. The method of any one of claims 11 to 14, **characterized in that** said step iv) comprises the step viii) of warming said articles (2).

16. The method of any one of claims 11 to 15, **characterized by** comprising a step ix) of adjusting said theoretically available accumulation area (A0) on the basis of a dew point in the environment of said accumulation device (1).
